(19) Europäisches Patentamt
European Patent Office
Office européen des brevets

(11) Veröffentlichungsnummer: **0 478 927 A2**

# (12) EUROPÄISCHE PATENTANMELDUNG

(21) Anmeldenummer: **91113188.6**

(51) Int. Cl.⁵: **C08L 25/02**, C08K 5/15

(22) Anmeldetag: **06.08.91**

(30) Priorität: **04.10.90 DE 4031365**

(43) Veröffentlichungstag der Anmeldung: **08.04.92 Patentblatt 92/15**

(84) Benannte Vertragsstaaten: **DE FR GB IT NL**

(71) Anmelder: **HÜLS AKTIENGESELLSCHAFT**
**Patentabteilung / PB 15 - Postfach 13 20**
**W-4370 Marl 1(DE)**

(72) Erfinder: **Mügge, Joachim, Dr.**
**Kantstrasse 14**
**W-4358 Haltern(DE)**
Erfinder: **Ohm, Hubertus, Dr.**
**Sixtusstrasse 8**
**W-4358 Haltern(DE)**

## (54) Mischungen aus Polystyrol und Maleinsäureanhydrid sowie Verfahren zu ihrer Herstellung.

(57) Die Funktionalisierung von Kautschuken oder Thermoplasten mit Maleinsäureanhydrid (MSA) ist mit beträchtlichen Emissions- und Dosierproblemen verbunden, die auch mit konventionellen MSA-Masterbatches nur teilweise behoben werden können. Demgegenüber wurde nun gefunden, daß Masterbatches aus MSA und einem Polystyrolharz nicht nur durch Schmelzemischen leicht herstellbar sind, sondern wegen der homogenen Verteilung des MSA gute Handhabbarkeit und wesentlich verbessertes Emissionsverhalten zeigen. Diese Gemische eignen sich besonders zur Funktionalisierung von Polyphenylenether oder Polystyrol.

EP 0 478 927 A2

Die Erfindung betrifft ein Masterbatch für die Funktionalisierung von Kautschuken und Thermoplasten mit Maleinsäureanhydrid (MSA) sowie ein Verfahren zu dessen Herstellung.

Die Funktionalisierung von Kautschuken und Thermoplasten mit ungesättigten Monomeren, die funktionelle Gruppen tragen, ist Stand der Technik. Beispielhaft seien folgende Schriften erwähnt: EP-A-0 210 307, EP-A-0 255 184, DE-A-37 36 851, US 4 816 515, JP-A-84/66 452, US 3 236 917, US 3 862 265, US 3 882 194, US 4 026 967, DE-A-22 16 718, DE-A-24 01 149 und WO 87/00 540.

Ein geeignetes derartiges Pfropfmonomeres soll neben einem niedrigen Preis auch eine hohe Reaktivität gegenüber doppelbindungshaltigen bzw. radikalisch angreifbaren Kautschuken und Thermoplasten aufweisen, um eine Pfropfung mit ausreichenden Ausbeuten in kontinuierlich arbeitenden Schneckenmaschinen bei entsprechend kurzen Verweilzeiten wirtschaftlich durchführen zu können. Diese Anforderungen werden von MSA als Pfropfmonomer erfüllt.

Ein gravierender Nachteil des MSA ist jedoch die schlechte Handhabbarkeit des in der Regel in Form grober Schuppen oder kleiner Barren anfallenden technischen MSA. Ein Einsatz zur Funktionalisierung aus Trockenmischungen von Kautschuk bzw. Thermoplast und MSA ist nur nach einem weiteren aufwendigen Verfahrensschritt, bei dem das MSA zu einem feinen Pulver gemahlen wird, möglich.

Eine ernste Komplikation bei der Verarbeitung von MSA ist dessen Toxizität, verbunden mit hoher Flüchtigkeit. Dies macht sich besonders nachteilig bei der Umsetzung von MSA mit hochschmelzenden Thermoplasten bemerkbar, da hier u. U. schon am Einzug der Schneckenmaschine die Siedetemperatur von MSA überschritten wird. Ein Ausweg wäre die direkte Zuführung von geschmolzenem MSA in die Polymerschmelze, beispielsweise durch eine Weichmacherdosiereinrichtung.

Bei den kleinen verwendeten MSA-Mengen (typischerweise ca. 0,1 bis 2 Gewichtsprozent, bezogen auf das Polymere) ist jedoch eine zuverlässige Dosierung im allgemeinen nicht möglich.

Hinzu kommt, daß MSA wegen seiner hohen Polarität mit den meisten Polymeren, insbesondere mit Polyolefinen, nur sehr schlecht mischbar ist. Dies führt zum Auftreten von MSA-Nestern in der Schmelze, verbunden mit unvollständiger Reaktion und beträchtlichen Emissionsproblemen.

Es stellte sich daher die Aufgabe, MSA als Batch in leicht handhabbarer Form zu erhalten. In dieser Form sollte es ohne Emissionsbelastung für die Funktionalisierung von Kautschuken und Thermoplasten einsetzbar sein und dabei homogen verteilt werden können.

Batchtypen, die diese Aufgabe zum Teil erfüllen, sind bereits auf dem Markt verfügbar. Sie bestehen aus porösen polymeren Trägern, wobei in die Poren MSA eingelagert ist. Als Trägermaterial wird Polypropylen oder HDPE verwendet; der MSA-Gehalt beträgt 25 bis 50 Gewichtsprozent. Derartige Batchtypen sind jedoch nur auf aufwendige Weise herstellbar. Zudem zeigen TGA-Untersuchungen in Stickstoffatmosphäre, daß die Flüchtigkeit des im Träger enthaltenen MSA derjenigen von freiem MSA vergleichbar ist. Erst die letzten ca. 40 % an MSA werden verzögert abgegeben.

Zudem ist es in vielen Fällen nicht wünschenswert, bei der Funktionalisierung zusätzlich Polypropylen oder HDPE einzubringen, da diese mit den meisten Polymeren unverträglich sind.

Demgegenüber wurde nun ein überraschend einfaches Verfahren zur Herstellung von MSA-Batches aufgefunden, bei dem MSA in einer kontinuierlich arbeitenden Schneckenmaschine bei Temperaturen unterhalb des Siedepunktes von MSA in ein Polystyrolharz eingearbeitet wird. Derartige Mischungen aus MSA und Polystyrolharz waren bisher nicht bekannt.

Die erfindungsgemäßen physikalischen Mischungen enthalten hierbei mindestens 1 Gewichtsprozent MSA. Die Obergrenze wird durch die Einarbeitungsbedingungen bestimmt. Sie liegt in typischen Fällen im Bereich von 35 Gewichtsprozent. In einer bevorzugten Ausführungsform enthält die Mischung 5 bis 30 Gewichtsprozent MSA, besonders bevorzugt 10 bis 25 Gewichtsprozent.

Als Polystyrolharz können folgende Polymeren verwendet werden: glasklares Polystyrol, schlagzähes Polystyrol (HIPS), Styrolblockcopolymere des Typs Styrol-Butadien, Styrol-Butadien-Styrol, Styrol-Ethylen-Butylen-Styrol bzw. Styrol-Isopren-Styrol oder Copolymere des Styrols mit z. B. Maleinsäureanhydrid, Maleinimid, Acrylsäure und Methacrylsäure bzw. deren Estern. Selbstverständlich können auch Mischungen derartiger Polystyrolharze eingesetzt werden.

Das Molekulargewicht Mw des Polystyrolharzes sollte hierbei mindestens 3 000 betragen.

Obwohl binäre Mischungen aus MSA und Polystyrolharz bevorzugt sind, kann ein kleinerer Teil des Polystyrolharzes durch übliche Zusatzstoffe, wie Stabilisatoren, Verarbeitungshilfsmittel, Weichmacher oder andere Polymere, ersetzt sein. Es derartiger Ersatz von Polystyrolharz durch Zusatzstoffe kann zu maximal 40 Gewichtsprozent, bevorzugt maximal 25 Gewichtsprozent und besonders bevorzugt maximal 10 Gewichtsprozent stattfinden. Radikalstarter dürfen jedoch nicht im Gemisch enthalten sein.

Die Mischungen werden aus den Komponenten durch Schmelzemischen bei Temperaturen unterhalb einer Massetemperatur von 210 °C hergestellt. Sinnvollerweise verwendet man ein kontinuierlich arbeitendes, vorzugsweise doppelwelliges Knetaggregat wie beispielsweise einen Doppelschneckenextruder. Die

Untergrenze der Massetemperatur wird durch den Erweichungspunkt des Polystyrolharzes bestimmt.

Polystyrolharz und MSA können zusammen als Feststoffe in das Mischaggregat eingegeben und dann aufgeschmolzen und vermischt werden. In einer bevorzugten Ausführungsform wird jedoch das MSA separat aufgeschmolzen und in die Polystyrolschmelze gepumpt. Besonders bevorzugt ist folgende Arbeitsweise: man schmilzt das MSA in einem doppelwandigen, flüssigkeitsbeheizten Vorlagegefäß bei 60 bis 150 °C auf und pumpt es über eine beheizbare Kolben- oder Kolbenmembranpumpe und beheizbare Rohrleitungen flüssig in die Schmelze des Polystyrolharzes. Bei kontinuierlichem Arbeiten in einem knetenden Aggregat muß hierbei der Dosier- und Einarbeitungsbereich mit stauenden oder rückfördernden Elementen gegen den Einzugs- und Schmelzbereich für das Polystyrolharz und den Entgasungsbereich vor dem Werkzeug abgedichtet sein. Der aus dem Werkzeug austretende Strang kann zu Granulat zerkleinert werden, so daß eine leichte und sichere Handhabung gewährleistet ist.

Bei den verwendeten niedrigen Temperaturen und in Abwesenheit von Radikalstartern findet keine Pfropfung des MSA auf das Polystyrolharz statt.

Überraschenderweise kann MSA zu einem hohen Prozentanteil in Polystyrolharze homogen eingearbeitet werden, ohne daß makroskopische Entmischungserscheinungen auftreten. Das eingeschlossene MSA kann daher im wesentlichen erst beim Aufschmelzen des Polystyrolharzes wieder freigesetzt werden.

Die erfindungsgemäßen Mischungen aus Polystyrolharz und MSA können beispielsweise zur Funktionalisierung folgender Kautschuke und Thermoplasten anstelle von reinem MSA verwendet werden: Ethylen-Propylen-Kautschuk (EPM), Ethylen-Propylen-Dien-Kautschuk (EPDM), Styrol-Butadien-Kautschuk (SBR), Styrolblockcopolymere des Typs SB, SBS, SEBS oder SIS, Polyoctenamer, Polyethylen, Polypropylen, Polyphenylenether, glasklares Polystyrol und/oder schlagzähmodifiziertes Polystyrol (HIPS). Besonders bevorzugt werden sie zur Funktionalisierung von Polyphenylenether, Polyphenylenether enthaltenden Gemischen, glasklarem oder schlagzähmodifiziertem Polystyrol oder Styrolblockcopolymeren verwendet.

Als Polyphenylenether kommen hierbei Polymere in Frage, die aus folgenden Einheiten aufgebaut sind:

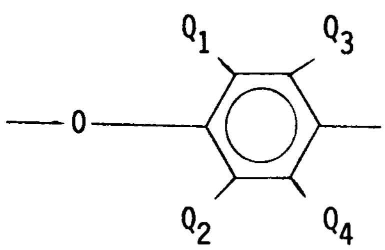

Hierbei sind $Q_1$ und $Q_2$ entweder Alkylreste mit 1 bis 10 C-Atomen, die vorzugsweise primär sind, Cycloalkylreste mit 5 bis 10 C-Atomen, Benzylreste mit 7 bis 10 C-Atomen oder Arylreste mit 6 bis 10 C-Atomen. $Q_3$ und $Q_4$ können die gleiche Bedeutung wie $Q_1$ und $Q_2$ haben; vorzugsweise bedeuten sie jedoch Wasserstoff.

Diese Polyphenylenether können nach jedem dem Stand der Technik entsprechenden Verfahren hergestellt werden. Üblicherweise werden die entsprechenden Phenole mit einem Sauerstoff enthaltenden Gas, wie z. B. Luft, in Gegenwart eines Katalysatorkomplexes oxidativ gekuppelt. Bei Einsatz eines in para-Stellung halogenierten Phenols muß eine ausreichende Menge an Säureacceptor anwesend sein. Vorzugsweise werden als Katalysatoren Kupfer-Amin-Komplexe oder manganhaltige Systeme benutzt (DE-OSS 32 24 691 und 32 24 692 sowie US-PSS 3 306 874, 3 306 875 und 4 028 341). Die Viskositätszahlen J, bestimmt nach DIN 53 728 in Chloroform bei 25 °C, liegen im Bereich von 20 bis 80 $cm^3/g$ (Konzentration 5 g/l), vorzugsweise im Bereich von 40 bis 70 $cm^3/g$.

Zur Herstellung dieser Polyphenylenether können beispielsweise folgende Monomere eingesetzt werden: 4-Brom-2,6-dimethylphenol, 2-Methyl-6-ethylphenol, 2,6-Diethylphenol, 2-Methyl-6-tert.-butylphenol, 4-Brom-2,6-diphenylphenol, 2-Benzyl-6-methylphenol, 2,6-Dibenzylphenol, 2,3,6-Trimethylphenol oder bevorzugt 2,6-Dimethylphenol. Selbstverständlich können auch Gemische derartiger Phenole verwendet werden.

Mit umfaßt werden natürlich auch modifizierte Polyphenylenether, z. B. Pfropfcopolymere mit Vinylmonomeren, Polystyrol oder anderen Modifizierungsreagenzien.

Beispiele

Folgende Materialien wurden eingesetzt:

PS (VESTYRON® 114; glasklares Polystyrol der HÜLS AG, D-4370 Marl)

HIPS (VESTYRON[R] 616; schlagzähmodifiziertes Polystyrol der HÜLS AG)
MSA technisch der HÜLS AG in Form kleiner Barren
PPE (Polyphenylenether aus 2,6-Dimethylphenol, hergestellt gemäß EP-A-0 247 314; J = 54 $cm^3/g$)

Die Herstellung der Mischungen erfolgte auf einem Doppelschneckenextruder Berstorff ZE 25 (33 D Verfahrenslänge, 7 Zonen).

Das Polystyrolharz wurde im Extruder aufgeschmolzen und das MSA in flüssiger Form bei 80 °C über eine beheizbare Kolbenmembranpumpe und beheizbare Leitungen in die Polystyrolharz-Schmelze eindosiert (Zone 3). Bei einer Schneckendrehzahl von 100 Upm, einer Zylindertemperatur von 180 °C mit resultierenden Massetemperaturen zwischen 185 und 195 °C und einem Massedurchsatz zwischen 3,5 und 4,0 kg/h wurde ein Extrudat erhalten, das im Wasserbad abgekühlt und stranggranuliert wurde.

Die in der Mischung enthaltene MSA-Menge wurde durch Elementaranalyse (Sauerstoffgehalt) bestimmt. Die Verteilung des MSA in der Polystyrolharz-Schmelze wurde durch Bestimmung der Sauerstoffverteilung mittels EDX (energiedispersive Analyse mit Röntgenstrahlen) im Transmissionselektronenmikroskop ermittelt.

Die Wirksamkeit der erfindungsgemäßen Mischungen als MSA-Spender wurde bei der Funktionalisierung von Polyphenylenether entsprechend WO 87/00 540 geprüft. Als Maß für die Wirksamkeit wurde die Kerbschlagzähigkeit von damit unter vergleichbaren Bedingungen hergestellten Blends mit PA 12 gewählt (40 Gewichtsprozent funktionalisierter Polyphenylenether; 60 Gewichtsprozent PA 12). Zum Vergleich wurden Funktionalisierungen mit reinem MSA durchgeführt. Die Emissionsbelastung wurde bei der Funktionalisierung qualitativ als Geruchsbelästigung eingestuft.

In Tabelle 1 sind erfindungsgemäße Beispiele aufgeführt. Für die Beispiele 3 und 4 wurde die Verteilung des MSA mittels EDX ermittelt. Beim Beispiel 3 (Abbildung 1) ist eine gleichmäßige Sauerstoffverteilung zu erkennen; beim Beispiel 4 (Abbildung 2) können Anreicherungen von MSA im Bereich bis 20 µm identifiziert werden.

Tabelle 1

| Bsp. Nr. | Polystyrolharz | | MSA (eindosiert) Gew.-T. | MSA (in Mischung nachgewiesen) | Unterschiede in Wirksamkeit gegenüber reinem MSA | Emissionen |
|---|---|---|---|---|---|---|
| | Art | Gew.-T. | | | | |
| 1 | PS | 89 | 11 | 11 | keine | keine |
| 2 | PS | 70 | 30 | 27,1 | keine | gering |
| 3 | HIPS | 89 | 11 | 11 | keine | keine |
| 4 | HIPS | 70 | 30 | 26,6 | keine | gering |

**Patentansprüche**

1. Mischung aus Polystyrolharz und mindestens 1 Gewichtsprozent, bezogen auf die Gesamtmischung, an Maleinsäureanhydrid (MSA), die frei von Radikalstartern ist und bei der ein physikalisches Gemisch vorliegt.

2. Mischung gemäß Anspruch 1, wobei 1 bis 35 Gewichtsprozent an MSA enthalten sind.

3. Mischung gemäß Anspruch 1, wobei 5 bis 30, vorzugsweise 10 bis 25 Gewichtsprozent an MSA enthalten sind.

4. Mischung gemäß den Ansprüchen 1 bis 3, wobei das Polystyrolharz glasklares Polystyrol und/oder schlagzähes Polystyrol ist.

5. Mischung gemäß den Ansprüchen 1 bis 4, wobei das MSA homogen verteilt ist.

6. Verfahren zur Herstellung der Mischungen gemäß den Ansprüchen 1 bis 5,
dadurch gekennzeichnet,
daß die Vermischung in der Schmelze unterhalb einer Massetemperatur von 210 °C erfolgt.

7. Verfahren gemäß Anspruch 6,
dadurch gekennzeichnet,
daß die Vermischung in einem kontinuierlich arbeitenden, vorzugsweise doppelwelligen Knetaggregat erfolgt.

8. Verfahren gemäß den Ansprüchen 6 oder 7,
dadurch gekennzeichnet,
daß das MSA separat aufgeschmolzen und in die Polymerschmelze gepumpt wird.

9. Verwendung der Mischungen gemäß den Ansprüchen 1 bis 5 bzw. der gemäß den Ansprüchen 6 bis 8 hergestellten Mischungen zur Funktionalisierung von Kautschuken und Thermoplasten.

10. Verwendung gemäß Anspruch 9, wobei als Thermoplasten bzw. Kautschuke Polyphenylenether, Polyphenylenether enthaltende Gemische, glasklares Polystyrol, schlagzähmodifiziertes Polystyrol oder Styrolblockcopolymere eingesetzt werden.

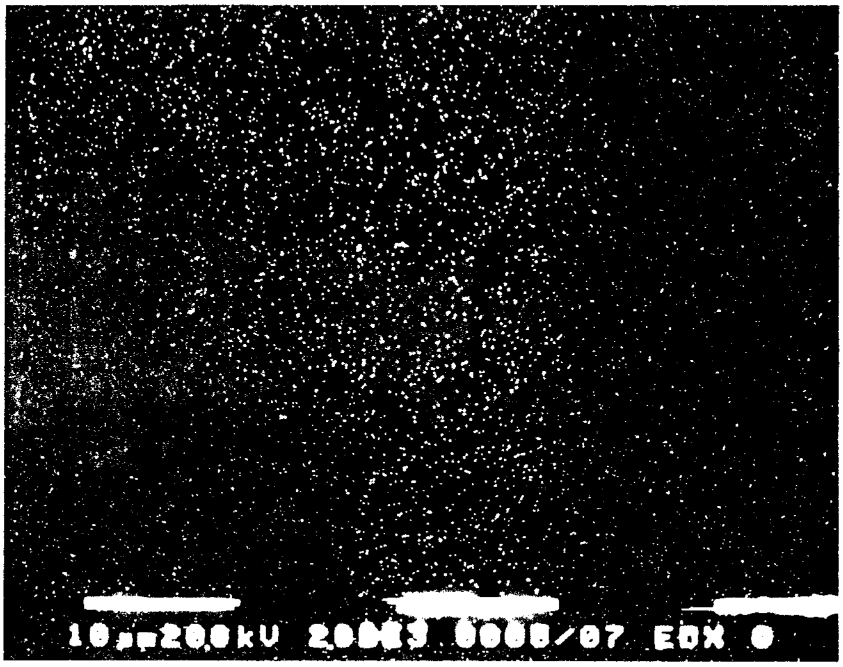

Abbildung 1

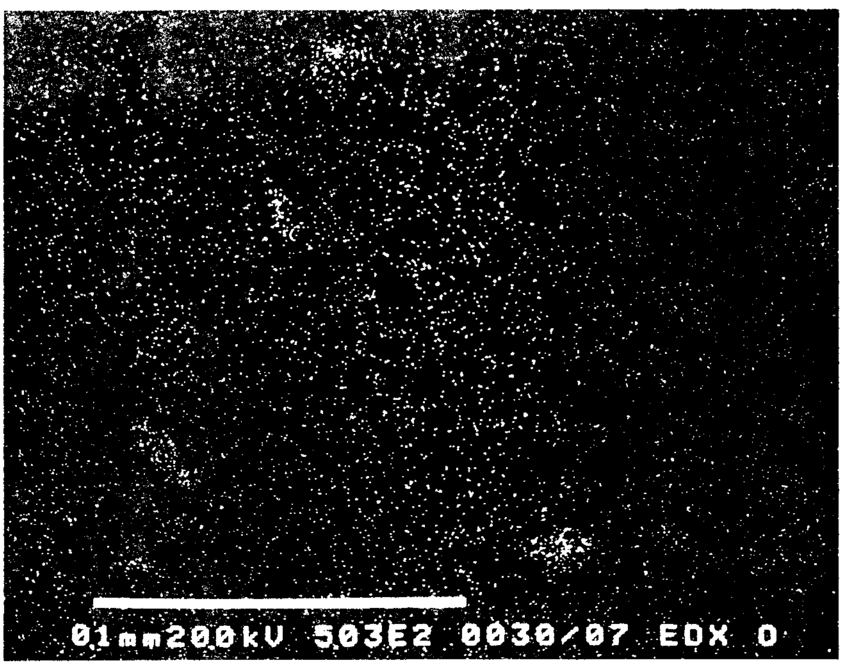


Abbildung 2